Europäisches Patentamt

European Patent Office

Office européen des brevets

(11) Publication number: **0 229 484**
**B1**

(12) **EUROPEAN PATENT SPECIFICATION**

(45) Date of publication of the patent specification:
18.10.89

(51) Int. Cl.⁴: **A01B 61/04**

(21) Application number: 86309413.2

(22) Date of filing: 03.12.86

(54) Improvements in reversible ploughs.

(30) Priority: 03.12.85 GB 8529752

(43) Date of publication of application:
22.07.87 Bulletin 87/30

(45) Publication of the grant of the patent:
18.10.89 Bulletin 89/42

(84) Designated Contracting States:
DE FR GB SE

(56) References cited:
FR-A- 2 090 170
FR-A- 2 255 833
FR-A- 2 301 165
FR-A- 2 358 089
FR-A- 2 381 451
FR-A- 2 419 000

(73) Proprietor: RANSOMES SIMS & JEFFERIES, PUBLIC
LIMITED COMPANY, Nacton Works, Ipswich IP3 9QG
Suffolk(GB)

(72) Inventor: Mills, John, 35 Stennetts Close, Trimley St.
Mary Ipswich IP10 0TZ(GB)

(74) Representative: Garratt, Peter Douglas et al, Mathys &
Squire 10 Fleet Street, London EC4Y 1AY(GB)

ACTORUM AG

## Description

This invention relates to reversible ploughs in which a plough body may move relatively to the plough frame to avoid an obstacle in the ground, the plough body being returned into work once the obstacle has been cleared.

There are a wide variety of known reversible ploughs which have this feature. Reference is directed, in particular, to Norwegian patent No. 134354. In this prior publication there is described a reversible plough having a stub beam carrying one left-handed and one right-handed plough body. The stub beam has at its forward end a mounting flange with four hemi-spherical caps disposed at the corners of a square. These caps engage respectively with four balls carried on a mounting bracket fixed to the frame. The stub beam is hollow and is held in place by means of a rod which passes from the mounting bracket along the interior of the stub beam to engage a spring mechanism acting between the rod and the stub beam so as to urge the mounting flange into engagement with the balls of the mounting bracket. If the working plough body should encounter an obstacle, the stub beam is able to pivot - against the action of the spring biassing mechanism - about the horizontal axis defined by the uppermost pair of balls. It will be understood that if the plough frame is reversed into the other ploughing position, tripping of the stub beam will bring into play the opposite pair of balls. If it is necessary to avoid the obstacle, the stub beam can pivot sideways about the axis defined by the right-hand or lefthand pair of balls as appropriate. This known mechanism is regarded as having certain drawbacks.

Firstly, since the spring force acts essentially between the stub beam and the plough frame, some means of containing the energy in the spring must be devised before the stub beam can be removed from the plough frame. This may be necessary not only during maintenance but also in order to change the furrow width of the plough. The second difficulty arises from the fact that rotation of the stub beam in the vertical plane may take place about either of two horizontal axes, depending upon whether the left-handed or the right-handed plough bodies are in work. This can have the result that a returning stub beam which overshoots the neutral position will oscillate with the mechanism then shifting from one rotational axis to the other. This will arise particularly where the return movement of the stub beam is not cushioned by soil resistance on the body because, for example, several plough bodies have encountered obstacles simultaneously, leading to the plough frame being displaced bodily upwards. The presence of two rotation axes may pose design problems in ensuring that the optimum restoring force/displacement characteristic is achieved for both sets of plough bodies.

A variety of mechanisms permitting the working body of a reversible plough to avoid an obstacle in the ground are disclosed in FR-2090170, FR-2301165 and FR-2358089. Each of these mechanisms is, however, regarded as subject to one or more disadvantages. It is a common drawback, for example, that the energy in a spring biassing arrangement must be contained or dissipated before the stub beam can be removed from the plough frame. Many suggested mechanisms include complex linkages which do not allow ready centring and which are prone to fouling.

It is an object of this invention to provide an improved reversible plough in which a stub beam carrying a left-handed and a right-handed plough body is able to pivot in opposite senses about the same horizontal axis to enable the working plough body to avoid an obstacle in the ground.

It is a further object of this invention to provide an improved reversible plough in which the stored energy in the biassing means serving to return the stub beam, is contained in a manner enabling removal of the stub beam from the plough frame without prior dissipation of that energy.

It is still a further object of this invention to provide an improved reversible plough which is mechanically simple and robust.

Accordingly, the present invention consists in a reversible plough comprising a plough frame reversible between left and right-handed ploughing positions; at least one stub beam carrying fixed left and right-handed plough bodies and mounted on the plough frame for pivotal movement about an axis which is horizontal at each ploughing position, in opposite directions away from an operative position in which the corresponding plough body is in work; and restoring means urging the stub beam to said operative position, the restoring means comprising a reaction means and biassing means carried on the stub beam urging said reaction means towards engagement with abutment means; characterised in that the reaction means comprises a unitary reaction member, in that the abutment means are mounted on the stub beam, in that the reaction member is biassed into engagement with the abutment means, and in that a pair of connecting elements are connected both at one end to the reaction member and at the opposite end to respective locations in the plough frame which are spaced on vertically opposite sides of said axis, such that on pivotal movement of the stub beam, a reaction in one of the connecting elements tends to separate the reaction member from the abutment means.

Preferably, the abutment means comprises vertically spaced abutments with the connecting elements being connected to the reaction member at respective vertically spaced locations, such that on pivotal movement of the stub beam, the reaction member is caused to rock in a vertical plane about one abutment and to separate from the other abutment.

Preferably, the connecting elements comprise respective links, said reaction in the connecting elements comprising tension in the corresponding link.

The invention will now be described by way of example with reference to the accompanying drawings in which:-

Figure 1 is a side elevation of the stub beam and part of the plough frame of a reversible plough according to this invention,

Figure 2 is a plan view on Figure 1, and

Figure 3 is a part view similar to Figure 1 but showing the stub beam in a different orientation.

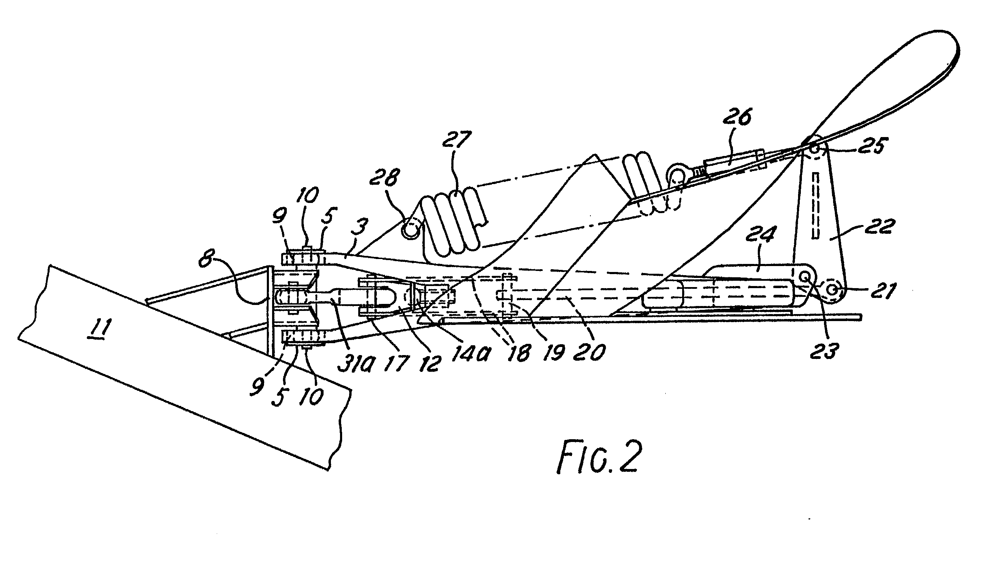

Referring to the drawings, plough bodies 1 and 1a are rigidly secured to a T-shaped stub beam 2 which is hollow. The forward end of the stub beam 2 is forked (as seen in Figure 2) with each limb 3 of the fork having a slot 4 opening to its free end. Within each such slot there is received a slider block 5 having upper and lower flanges 6 and 7 which constrain the stub beam to sliding movement fore and aft relative to the slider block 5. Each slider block is supported on a mounting bracket 8 through a spherical bearing 9, the two spherical bearings defining between them a horizontal tripping axis 10. The mounting bracket 8 is rigidly secured to the plough frame shown at 11.

It will be understood that the stub beam 2 is able to rotate relative to the plough frame 11 about the tripping axis 10. In addition, the stub beam 2 is able to move laterally with respect to the plough frame, such movement being accommodated by rocking of the slider blocks 5 on the spherical bearings 9 and by displacement of one stub beam limb 3 rearwardly with respect to the associated slider block.

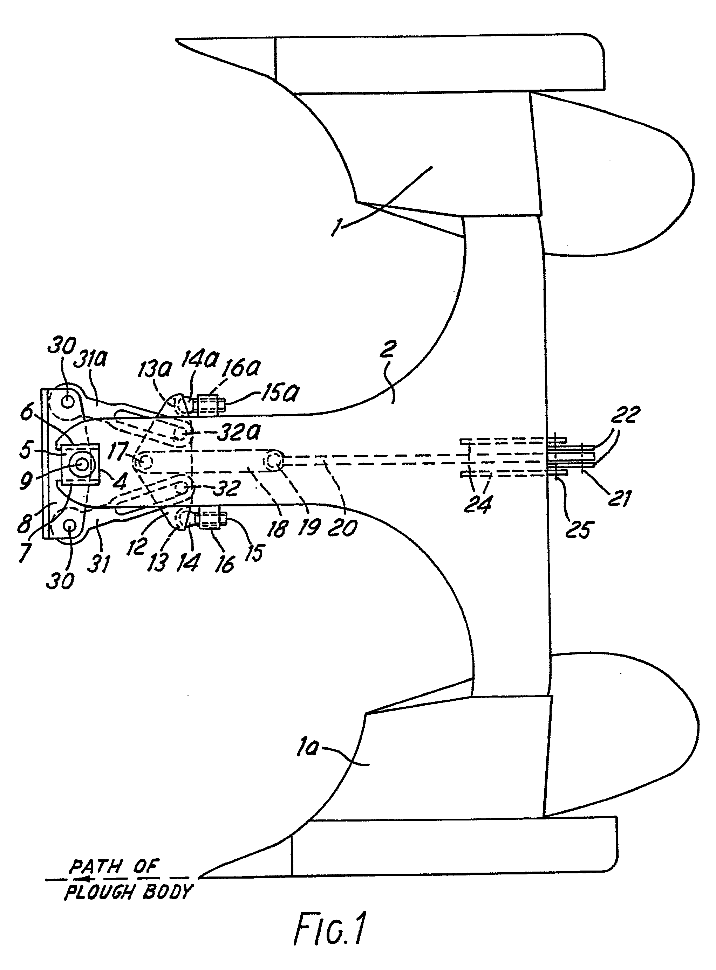

There will now be described the mechanism by which the stub beam is normally held in the operative position shown in Figure 1 and restored to that position after any displacement to avoid an obstruction in the ground.

Between the limbs 3 of the stub beam 2, there is vertically disposed a cross-bar 12 having lower and upper cup-shaped recesses 13 and 13a. Studs 15 and 15a are mounted in threaded engagement with respective sockets 16 and 16a on the stub beam and carry respective balls 14 and 14a. These balls are received respectively in the cup-shaped recesses 13 and 13a. A pin 17 passing through the cross-bar 12 provides a mounting for the forward ends of a pair of parallel links 18, the rearward ends of which carry a further pin 19 passing through an eye at one end of a connecting rod 20. The opposite end of the connecting rod 20 is pivotally connected at 21 with a bell crank 22 which is mounted for pivotal movement about a vertical pivot axis 23 provided by a pair of plates 24 secured to the rear of the stub beam. The opposite extremity of the bell crank 22 is connected through a pin 25 with one end of a turnbuckle 26, connected in turn to a substantial tension spring 27 which is anchored at its other end to an ear 28 formed integrally with the stub beam.

On the mounting bracket 8, there are provided two spherical bearings 30 disposed equal distances vertically above and below the horizontal trip axis 10. Each bearing forms a mounting for one end of a respective connecting link 31, 31a, the opposite end of each link being slotted to receive a corresponding pin 32, 32a carried in the cross-bar 12.

In the normal position shown in Figures 1 and 2, adjustments are made such that with the pins 32, 32a at the ends of the slotted links 31, 31a, the cross-bar is just in engagement with the balls 14, 14a. Any tendency for the stub beam to move upwardly about the axis 10 will lead to tension in the link 31 tending to rock the cross-bar 12 about the ball 14a. This movement is resisted by the tension in connecting rod 20 set up, through the bell crank 22, by the spring 27. Identical considerations apply to any tendency of the stub beam to rotate in the opposite direction and it will thus be seen that a stable working position is defined.

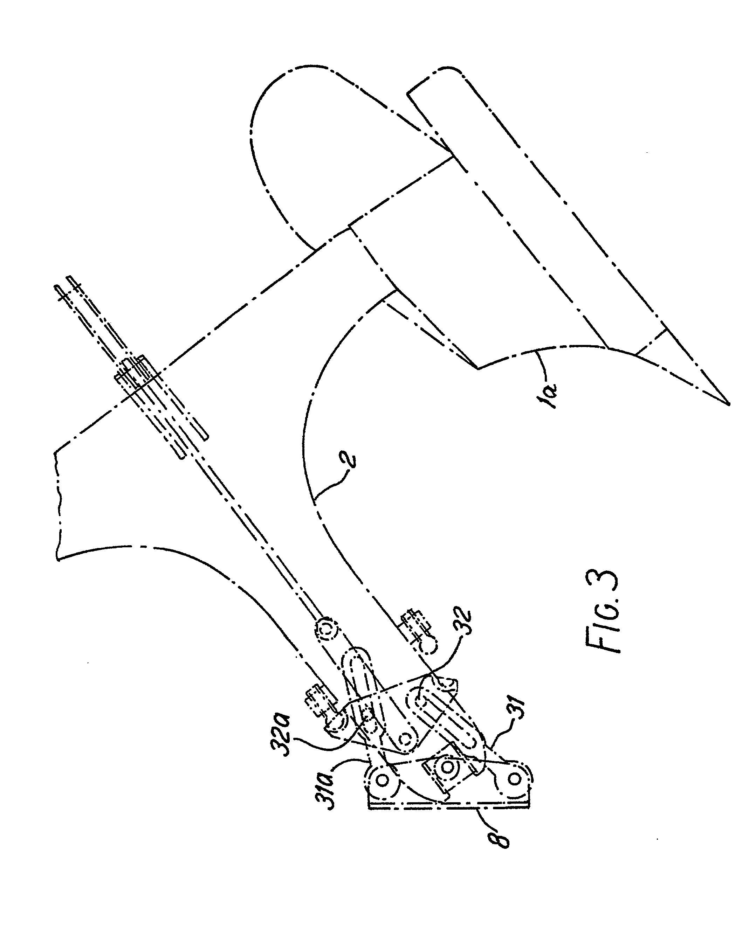

If the working plough body encounters an obstacle such that the point load exceeds a predetermined threshold, the biasing force in spring 27 will be overcome and the stub beam will rotate upwardly. Tension in the lower link 31 will cause the cross-bar 12 to rock about the upper ball 14a and to separate from the lower ball 14. Such movement is accompanied, as explained above, by an extension in the spring 27. The tripped position is shown in Figure 3 from which it will be seen that, whilst pin 32 remains at the end of slotted link 31, the upper pin 32a has moved forwardly with respect to the slotted link 31a.

Depending upon working conditions and particularly upon the shape of the obstruction encountered in the ground, the plough body may take a path which involves lateral movement of the stub beam in addition to - or more likely in combination with - the above described vertical movement. The lateral movement of the stub beam is accommodated by tilting of each slider block 5 about its associated spherical bearing 9 with one limb of the stub beam sliding rearwardly with respect to the slider element. On the opposite limb, the slider block 5 will be in engagement with the closed end of the slot 4. The spherical bearings 30 enable the links 31 and 31a to follow this movement and tension in both these links will lead to separation of the cross-bar 12 equally from both balls 14 and 14a. In practice, the lateral movement will, as mentioned above, usually be accompanied by upward movement.

It should be understood that this invention has been described by way of example only and a variety of modifications are possible without departing from the scope of the invention. For example, means other than the described connecting rod, bell crank and tension spring could be provided for biassing the cross-bar into engagement with the balls on the stub beam. A hydraulic ram could usefully be employed for this purpose. Similarly, a different form of abutment might be used in place of the described balls, although the described arrangement has the advantage that setting of the working position can be achieved very simply by screw adjustment of the studs 15 and 15a in the corresponding sockets. In one alternative, a single abutment might be employed with alternative means for restraining movement of the cross-bar orthogonally of the length of the stub beam. The cross-bar might thus be replaced by a reaction member in the form of a block slidable along the length of the stub beam. With such a reaction member, the two connecting links would preferably be connected at a common location.

It would also be understood that other forms of connecting elements may be employed beyond the described slotted links. Thus, for example solid links could be arranged to extend through apertures in the cross-bar, the free ends of the link having T-bars or other formations to prevent withdrawal of the link from the cross-bar. In some circumstances, chains or other flexible links might be employed. Whilst in the described embodiment and the variations suggested above, it is tension in the connecting element which tends to separate the cross-bar or other reaction member from the abutment, an alternative arrangement is contemplated in which the reaction is compressive.

In applications where lateral movement of the stub beam is likely to occur to the same degree as vertical movement, an alternative arrangement is foreseen in which the connection of the stub beam to the plough frame is universal and a further pair of connecting links is provided in the horizontal plane. Two further abutments might then be provided on the stub beam; alternatively, a continuous annular abutment might be provided.

## Claims

1. A reversible plough comprising a plough frame (11) reversible between left and right-handed ploughing positions; at least one stub beam (2) carrying fixed left and right-handed plough bodies (1, 1a) and mounted on the plough frame for pivotal movement about an axis (10) which is horizontal at each ploughing position, in opposite directions away from an operative position in which the corresponding plough body is in work; and restoring means urging the stub beam (2) to said operative position, the restoring means comprising reaction means (12) and biassing means (18–28) carried on the stub beam urging said reaction means towards engagement with abutment means; characterised in that the reaction means comprises a unitary reaction member (12), in that the abutment means (14, 14a) are mounted on the stub beam (2), in that the reaction member (12) is biassed into engagement with the abutment means (14, 14a) and in that a pair of connecting links (31, 31a) are connected both at one end to the reaction member (12) and at the opposite end to respective locations (30) in the plough frame (8, 11) which are spaced on vertically opposite sides of said axis (10), such that on pivotal movement of the stub beam (2), tension in one of the connecting links (31, 31a) tends to separate the reaction member (12) from the abutment means (14, 14a).

2. A reversible plough according to Claim 1, wherein the abutment means comprises vertically spaced abutments (14, 14a) with the connecting links (31, 31a) being connected to the reaction member (12) at respective vertically spaced locations, such that on pivotal movement of the stub beam (2), the reaction member (12) is caused to rock in a vertical plane about one abutment and to separate from the other abutment.

3. A reversible plough according to Claim 2, wherein the abutments (14, 14a) are separately adjustable in position relative to the stub beam (2).

4. A reversible plough according to any one of the preceding claims, wherein the stub beam (2) is mounted on the plough frame (8, 11) through a pair of spherical bearing means (5, 9) spaced along the tripping axis, each spherical bearing means further providing for sliding movement between the stub beam (2) and the plough frame (8, 11).

5. A reversible plough according to Claim 4, wherein each, spherical bearing means comprises a slider block (5) mounted through a spherical bearing (9) on the plough frame (8, 11) and engagable within a corresponding slot (4) in the stub beam.

6. A reversible plough according to any one of the preceding claims, wherein the connecting links are mounted for limited sliding movement relative to either of the plough frame or stub beam.

7. A reversible plough according to Claim 6, wherein each connecting link (31, 31a) is connected at one end to the plough frame through a spherical bearing (30).

8. A reversible plough according to any one of the preceding claims, wherein the stub beam is removable from the plough frame with the biassing means (18–28) continuing to urge the reaction member (12) towards engagement with the abutment means (14, 14a).

## Revendications

1. Charrue réversible comprenant un châssis de charrue (11) réversible entre des positions de labour à gauche et à droite; au moins une embase (2) portant des corps de charrue fixes à gauche et à droite (1, 1a) et montée sur le châssis de charrue pour un mouvement pivotant autour d'un axe (10) qui est horizontal à chaque position de labour, dans des directions opposées à partir d'une position active dans laquelle le corps de charrue correspondant est en service; et des moyens de retour qui rappellent l'embase (2) à ladite position active, les moyens de retour comprenant des moyens de réaction (12) et des moyens de poussée (18–28) portés sur l'embase et rappelant lesdits moyens de réaction vers le contact avec les moyens de butée; caractérisée en ce que les moyens de réaction comprennent un élément de réaction unitaire (12), en ce que les moyens de butée (14, 14a) sont montés sur l'embase (2), en ce que l'élément de réaction (12) est rappelé en contact avec les moyens de butée (14, 14a) et en ce que deux barres de liaison (31, 31a) sont connectées toutes deux, à une extrémité, à l'élément de réaction (12) et, à l'extrémité opposée, à des endroits respectifs (30) du châssis de charrue (8, 11) qui sont espacés sur les côtés verticalement opposés dudit axe (10), de sorte que, lors du mouvement pivotant de l'embase (2), la tension dans une des barres de liaison (31, 31a) sont à séparer l'élément de réaction (12) des moyens de butée (14, 14a).

2. Charrue réversible suivant la revendication 1, dans laquelle les moyens de butée comprennent des butées verticalement espacées (14, 14a), les barres de liaison (31, 31a) étant connectées à l'élément de réaction (12) à des endroits respectifs verticalement espacés de sorte que, lors du mouvement pivotant de l'embase (2), l'élément de réaction (12) doit pivoter dans un plan vertical autour d'une butée et s'éloigner de l'autre butée.

3. Charrue réversible suivant la revendication 2, dans laquelle les butées (14, 14a) sont réglables séparément en position par rapport à l'embase (2).

4. Charrue réversible suivant l'une quelconque des revendications précédentes, dans laquelle l'embase (2) est montée sur le châssis de charrue (8, 11) par l'intermédiaire de deux organes de portée sphériques (5, 9) espacés le long de l'axe de déclenchement, chaque organe de portée sphérique permettant en outre un mouvement coulissant entre l'embase (2) et le châssis de charrue (8, 11).

5. Charrue réversible suivant la revendication 4, dans laquelle chaque organe de portée sphérique comprend un bloc de coulisseau (5) monté, par l'intermédiaire d'un palier sphérique (9) sur le châssis de charrue (8, 11) et pouvant s'engager dans une rainure correspondante (4) de l'embase.

6. Charrue réversible suivant l'une quelconque des revendications précédentes, dans laquelle les barres de liaison sont montées pour un mouvement coulissant limité par rapport au châssis de charrue ou à l'embase.

7. Charrue réversible suivant la revendication 6, dans laquelle chaque barre de liaison (31, 31a) est connectée, à une extrémité, au châssis de charrue par l'intermédiaire d'un palier sphérique (30).

8. Charrue réversible suivant l'une quelconque des revendications précédentes, dans laquelle l'embase peut être enlevée du châssis de charrue tandis que les moyens de poussée (18–28) continuent à pousser l'élément de réaction (12) vers le contact avec les moyens de butée (14, 14a).

**Patentansprüche**

1. Schwenkpflug, umfassend einen Pflugrahmen (11) der zwischen links- und rechtsseitigen Pflugstellungen schwenkbar ist; wenigstens eine Pflugstange (2), die fixierte links- und rechtsseitige Pflugkörper (1, 1a) trägt und die an den Pflugrahmen für eine Schwenkbewegung um eine Achse (10) horizontal zu jeder Pflugstellung montiert ist in gegenüberliegenden Richtungen, entfernt von einer Betriebsstellung, in der der entsprechende Pflugkörper arbeitet; sowie Mittel zur Rückstellung, die die Pflugstange (2) in die Betriebsstellung drängt, wobei die Mittel zur Rückstellung von der Pflugstange getragene Reaktionsmittel (12) und Mittel zur Vorspannung (18–28) umfassen, die die Reaktionsmittel zu einem Eingriff mit Widerlagern drängen, dadurch gekennzeichnet, daß die Reaktionsmittel ein einheitliches Reaktionsglied (12) umfassen, die Widerlager auf die Pflugstange (2) montiert sind, das Reaktionsglied (12) im Eingriff mit den Widerlagern (14, 14a) vorgespannt ist, daß ein Paar Verbindungsglieder (31, 31a) an einem Ende mit dem Reaktionsglied (12) und am gegenüberliegenden Ende an entsprechenden Orten (30) im Pflugrahmen (8, 11), die durch Zwischenräume an vertikal gegenüberliegenden Seiten der Achse (1C) getrennt sind, verbunden ist, derart, daß eine Schwenkbewegung der Pflugstange (2), eine Spannung in einem der Verbindungsglieder (31, 31a) dazu führt, daß das Reaktionsglied (12) aus dem Widerlager (14, 14a) getrennt wird.

2. Schwenkpflug nach Anspruch 1, wobei die Widerlager senkrecht durch Zwischenräume getrennte Widerlager (14, 14a) mit den Verbindungsgliedern (31, 31a) umfassen, die mit dem Reaktionsglied (12) an entsprechenden senkrecht durch Zwischenräume getrennten Orten verbunden sind, derart, daß auf eine Schwenkbewegung der Pflugstange (2) das Reaktionsglied (12) in eine senkrechte Ebene um ein Widerlager schaukelt und aus dem anderen Widerlager getrennt wird.

3. Schwenkpflug nach Anspruch 2, wobei die Widerlager (14, 14a) separat in eine Stellung relativ zur Pflugstange (2) einstellbar sind.

4. Schwenkpflug nach einem der vorhergehenden Ansprüche, wobei die Pflugstange (2) auf dem Pflugrahmen (8, 11) mittels eines Paares kugelförmiger Lager (5, 9), die entlang der Auslöseachse durch Zwischenräume getrennt sind, montiert ist, wobei jedes kugelförmige Lager weiterhin für eine gleitende Bewegung zwischen der Pflugstange (2) und dem Pflugrahmen (8, 11) sorgt.

5. Schwenkpflug nach Anspruch 4, wobei jedes kugelförmige Lager einen Gleitblock (5) umfaßt, der an einem kugelförmigen Träger (9) an dem Pflugrahmen (8, 11) montiert ist und in einen entsprechenden Schlitz (4) in der Pflugstange eingreifbar ist.

6. Schwenkpflug nach einem der vorhergehenden Ansprüche, wobei die Verbindungsglieder montiert sind für eine begrenzte gleitende Bewegung relativ entweder zum Pflugrahmen oder zur Pflugstange.

7. Schwenkpflug nach Anspruch 6, wobei jedes Verbindungsglied (31, 31a) an einem Ende an den Pflugrahmen mit einem kugelförmigen Träger (30) verbunden ist.

8. Schwenkpflug nach einem der vorhergehenden Ansprüche, wobei die Pflugstange aus dem Pflugrahmen entfernbar ist, wobei die Mittel zur Rückstellung (18–28) weiterhin das Reaktionsglied (12) zu einem Eingriff mit den Widerlagern (14, 14a) drängt.

PATH OF
PLOUGH BODY

FIG.1

FIG.2

FIG.3

EP 0 229 484 B1